# EUROPÄISCHE PATENTANMELDUNG

(11) **EP 1 262 737 A2**
(43) Veröffentlichungstag der Anmeldung: **04.12.2002**
(21) Anmeldenummer: 02011286.8
(22) Anmeldetag: 22.05.2002
(51) Int. Cl.: G01B 11/06

(54) **Vorrichtung zum Messen der Dicke von Materialbahnen**

(30) Priorität: 31.05.2001 DE 20109119 U
(71) Anmelder: Knorr, Helmut, 86919 Utting am Ammersee (DE)
(72) Erfinder: Knorr, Helmut, 86919 Utting am Ammersee (DE)

(57) **Zusammenfassung**

Die Erfindung geht aus von einer Vorrichtung zum Messen der Dicke von Materialbahnen, wobei die Materialbahnen über eine Metallwalze oder -platte gezogen werden und ein Abstandssensor über ein Roll-, Gleit-, oder Luftlager in definiertem Abstand über der Oberfläche der Materialbahn gehalten wird. Erfindungsgemäß sind zwei Roll-, Gleit-, oder Luftlager so in einer Halteeinrichtung für den Abstandssensor angeordnet, dass die Lager in Transportrichtung der Materialbahn gesehen einen Abstand aufweisen, wobei der Abstandssensor zwischen den Roll-, Gleit-, oder Luftlagern vorgesehen ist.

## Beschreibung

Die Erfindung geht aus von einer Vorrichtung zum Messen der Dicke von Materialbahnen nach dem Oberbegriff von Anspruch 1.

Derartige Messeinrichtungen werden insbesondere bei der Herstellung von Folienbahnen verwendet, die über eine Metallwalze gezogen werden. Auf der Folienbahn list ein Messwagen mit einer Rolle aufgesetzt. In dem Messwagen ist ein Sensor angeordnet, der den Abstand zu der Metallwalze misst. Da der Sensor eine feste Zuordnung zu der Rolle aufweist, kann die Dicke der Folie ermittelt werden.

Es sind auch bereits Messeinrichtungen dieser Art bekannt geworden, bei denen der Messwagen zwei nebeneinanderliegende Rollen aufweist, wobei der Sensor zwischen diesen Rollen angeordnet ist.

Den bekannten Messeinrichtungen haftet der Nachteil an, dass die Genauigkeit des Messergebnisses stark von der Lagerung des Messwagens abhängt. Bereit ein leichtes Verkippen durch das Ziehmoment der Folie bringt den Sensor ebenfalls in eine Kipplage und verfälscht somit das Messergebnis erheblich. Die Messwagen werden häufig quer über die Folienbahn traversiert, um ein Dickenprofil der Folie zu erhalten. Auch in diesem Fall reicht bei den bekannten Messeinrichtungen bereits eine minimale Durchbiegung der Metallwalze - wie sie unter praktischen Bedingungen nicht zu vermeiden ist - aus, um über die Breite der Folienbahn unterschiedliche Messergebnisse zu erhalten, deren Abweichung vom tatsächlichen Wert nicht zu tolerieren ist.

Es war deshalb die Aufgabe der Erfindung, den Messwagen so auszugestalten, dass der Sensor immer den gleichen Abstand zur Oberfläche der Folie aufweist. Diese Bedingung sollte sowohl bei einem Verkippen des Messwagens durch das Zugmoment der Folie, als auch bei einer Durchbiegung der Metallwalze gelten.

Gelöst wird die Aufgabe durch eine Messeinrichtung mit den kennzeichnenden Merkmalen des Hauptanspruchs. Durch die Anordnung des Sensors zwischen zwei Rollen (es können auch Gleit-, oder Luftlager verwendet werden), die in Transportrichtung der Folie gesehen einen Abstand aufweisen, muss bei der Lagerung des Messwagens nur darauf geachtet werden, dass beide Rollen auf der Folienoberfläche aufliegen. Liegen beide Rollen auf, kann es auch zu keinem Verkippen des Sensors kommen. Messfehler rücken dadurch in eine tolerierbare Größenordnung.

Idealerweise ist der Sensor auf einer direkten Verbindungslinie zwischen den Rollen angebracht. Durch diese Maßnahme wird das Messergebnis noch unabhängiger von evtl. Durchbiegungen der Metallwalze bei einer Dickenprofilmessung mit traversierendem Messwagen.

Bei einer ersten Ausführungsform ist der Messwagen zweiteilig ausgeführt. Ein erster Halter dient der Lagerung des Messwagens und nimmt eine der Rollen auf. Ein zweiter Halter, der den Sensor und die zweite Rolle trägt, ist über eine Achse gelenkig mit dem ersten Halter verbunden. Da die Achse parallel zur Oberfläche der Folie verläuft, wird sich - selbst bei einem Verkippen des ersten Halters durch das Zugmoment der Folie - die Rolle des zweiten Halters immer in Kontakt mit der Folie befinden.

Die Achse, mit der der zweite Halter gelenkig mit dem ersten Halter verbunden ist, verläuft in vortelhafter Weise durch die Achse der Rolle des ersten Halters. Dadurch ist gewährleistet, dass der Sensor vollkommen unabhängig von dem Verkippwinkel des ersten Halters und damit auch unabhängig von dem Winkel zwischen erstem und zweitem Halter, immer den genau gleichen Abstand und die gleiche Orientierung zur Oberfläche der Folie hat.

Um beim Traversieren des Messwagens möglichst ein seitliches Rutschen der Rollen zu vermeiden und eine Ausrichtung des Messwagens zuzulassen, die eine Rollbewegung in der Richtung gestattet, in der sich der Messwagen relativ zu der Folie bewegt, ist der erste Halter an einer zur Folie senkrechten Achse aufgehängt und um diese Achse drehbar gelagert. Durch die Rolle des zweiten Halters wird die Ausrichtung des gesamten Messwagens gesteuert, da sie relativ zur Bewegung der Folie eine nachlaufende Rolle bildet.

Durch die Drehung des Messwagens um diese zur Folie senkrechte Achse wird aber der Abstand des Sensors zur Folie verändert, sofern die Folie über eine Metallwalze und nicht über eine Metallplatte gezogen wird. Um diesen Fehler zu kompensieren ist ein Winkelgeber vorgesehen, mit dem der Drehwinkel des Messwagens bestimmt werden kann. Das Messergebnis muss dann mit einem von diesem Winkel abhängigen Faktor beaufschlagt werden.

Bei einem zweiten Ausführungsbeispiel wird ein einteilige Messwagen verwendet. In diesem Messwagen sind die beiden Rollen jeweils einzeln so gelagert, dass sie gegenüber ihrer senkrecht zur Folie verlaufenden Drehachse nachlaufend aufgehängt sind. Auf diese Weise wird bei einem Treversieren nicht der ganze Messwagen gedreht, sondern es richten sich nur die beiden Rollen entsprechend der Relativbewegung zwischen Folie und Messwagen aus.

Um den Abstand zwischen Sensor und Folie unabhängig von der Stellung der Rollen gleich zu halten, muss sich der Sensor mit den Rollen bewegen. Hierzu sind die Rollen mit einem Halter verbunden, der mit seinen beiden Enden senkrecht über den waagrechten Drehachsen der Rollen mit diesen verbunden ist. An diesem Halter ist der Sensor befestigt.

Wenn auch ein evtl. seitliches Verkippen kompensiert werden soll, werden an dem Halter zwei Sensoren befestigt. Ein verkippen kann dann durch unterschiedliche Messergebnisse der beiden Sensoren festgestellt werden. Über eine nichtlineare Korrekturrechnung kann dieser Fehler berichtigt werden.

Damit sichergestellt ist, dass immer beide Rollen auf der Folie aufliegen, ist der gesamte Messwagen drehbar um eine Achse aufgehängt die parallel zur Folienoberfläche und senkrecht zur Transportrichtung der Folie verläuft.

In beiden Ausführungsbeispielen sind die Rollen als ballige Präzisionsrollen ausgeführt. Die Erfindung ermöglicht jedoch die gleichen Vorteile, wenn statt der Präzisionsrollen Luft- oder Gleitlager verwendet werden. Die Auswahl der Lager hängt von der Art und Beschaffenheit der zu vermessenden Materialbahn ab.

Weitere Vorteile der Erfindung ergeben sich aus den Unteransprüchen und werden anhand von Ausführungsbeispielen in Verbindung mit der Zeichnung näher erläutert.

Es zeigt:
- Fig. 1: ein erstes Ausführungsbeispiel der Erfindung mit einer zweiteiligen Halteeinrichtung,
- Fig. 2: die Unteransicht auf eine Messvorrichtung nach Fig. 1,
- Fig. 3: ein zweites Ausführungsbeispiel der Erfindung mit einer einteiligen Halteeinrichtung,
- Fig. 4: die Unteransicht auf eine Messvorrichtung nach Fig. 3,
- Fig. 5: die Unteransicht auf eine Ausführungsform des Ausführungsbeispiels nach Fig. 3 und Fig. 4 mit zwei Sensoren und
- Fig. 6: die Unteransicht auf eine Ausführungsform des Ausführungsbeispiels nach Fig. 1 und Fig. 2 mit zwei Sensoren.

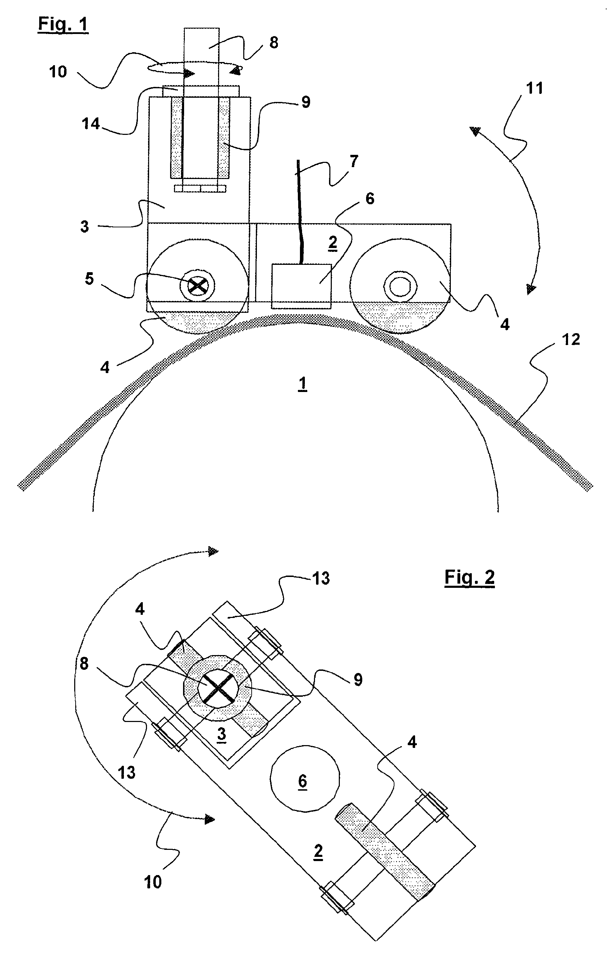

In dem ersten, in Fig. 1 und Fig. 2 gezeigten Ausführungsbeispiel ist die als Messwagen ausgebildete Halteeinrichtung für den Sensor zweiteilig ausgebildet. Der Sensor 6 ist an einem ersten Halter 2 befestigt, der zusätzlich die Präzisionsrolle 4 aufnimmt. Diese ist auf einer nicht näher bezeichneten Achse durch ein ebenfalls nicht näher bezeichnetes Lager gehalten.
Der der Präzisionsrolle 4 gegenüberliegende Teil des ersten Halters 2 läuft in 2 seitlichen Schenkeln 13 aus, die den zweiten Halter 3 aufnehmen, so dass dieser von dem ersten Halter 2 u-förmig umschlossen ist. Der zweite Halter 3 ist in den seitlichen Schenkeln 13 des ersten Halters 2 über die Achse 5 schwenkbar gelagert. Die Achse 5 trägt gleichzeitig eine weitere Präzisionsrolle 4, die wiederum über ein nicht näher bezeichnetes Lager befestigt ist.

Beide Präzisionsrollen 4 sitzen auf der zu vermessenden Folie 12 auf, die über die Metallwalze 1 gezogen wird.

Über ein Lager 9 ist der Messwagen an einer Achse 8 aufgehängt, so dass eine Drehung des gesamten Messwagens entsprechend dem Doppelpfeil 11 ermöglicht wird. Ebenso ist eine lineare Verschiebung in Achsrichtung möglich, so dass gewährleistet ist, dass sich die Präzisionsrolle 4 im Halter 3 immer in Anlage an der Folie 12 befindet. Die Achse 8 ist an einer nicht gezeigten Traversiereinrichtung befestigt. Wird nun der Messwagen durch die Traversiereinrichtung quer zur Förderrichtung der Folie 12 bewegt, so dreht sich der Messwagen um die Achse 8 soweit, dass die Ausrichtung der relativen Bewegung zwischen Folie und Messwagen entspricht.

Da bei dieser Drehung der Sensor 6 seinen Abstand zu der Folie 12 und der Metallwalze 1 vergrößert, ist ein Winkelgeber 14 vorgesehen, mit dem der Verdrehwinkel bestimmt werden kann. Das über die Leitung 7 von dem Sensor abgegebene Signal kann so in einer nicht gezeigten Prozessoreinheit entsprechend korrigiert werden.

Aufgrund der schwenkbaren Verbindung der beiden Halter 2 und 3 über die Achse 5 ist gewährleistet, dass immer beide Präzisionsrollen 4 auf der Folie 12 aufsitzen. Auch wenn sich die Position des Messwagens gegenüber der Metallwalze 1 leicht verschiebt, wird der Halter 2 angehoben oder abgesenkt indem er um die Achse 5 in Richtung des Doppelpfeils 11 schwenkt. Da die Achse 5 gleichzeitig die Drehachse der Präzisionsrolle 4 im Halter 3 ist, verändert sich bei dieser Schwenkbewegung der Abstand des Sensors 6 zur Folie nicht.

Wenn die Geschwindigkeit der Traversiereinrichtung etwa Fördergeschwindigkeit der Folie entspricht, wird sich der Messwagen -wie in Fig. 2 gezeigt - um etwa 45° drehen. Dadurch wird ein seitliches Gleiten der Präzisionsrollen auf der Folie vermieden. Auch empfindliche Folien können so vermessen werden, ohne dass Schleifspuren sichtbar werden und diesen Folienabschnitt unbrauchbar machen.

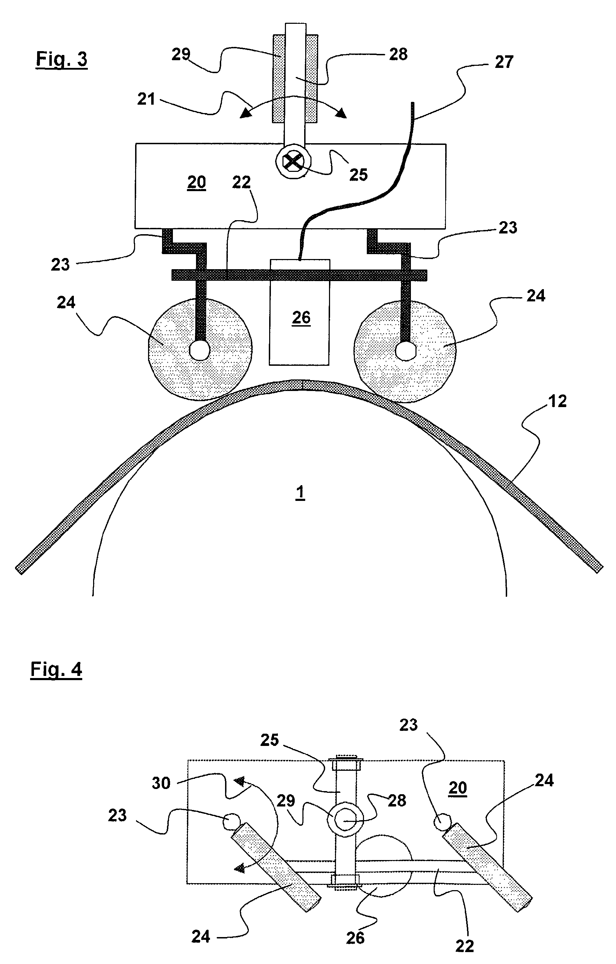

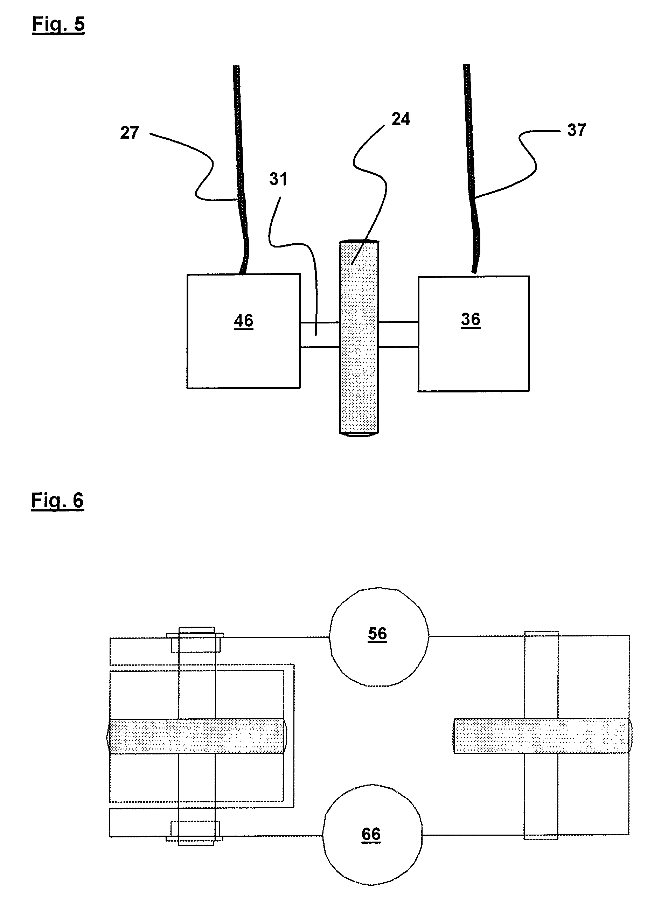

In dem zweiten, in Fig. 3 und Fig. 4 gezeigten Ausführungsbeispiel ist, im Gegensatz zu dem ersten Ausführungsbeispiel, der Messwagen 20 einteilig ausgeführt. Die Präzisionsrollen 24 sind hier jeweils an einem gekröpften Halter 23 gelagert. Die Halter 23 sind an dem Messwagen 20 drehbar befestigt, so dass die Rollen entlang dem Doppelpfeil 30 verschwenken können.

Bei einer Transportrichtung der Folie 12 von links nach rechts laufen die Präzisionsrollen 24 dem Drehpunkt der Halter 23 nach. Auf diese Weise werden die Rollen bei einer Änderung der relativen Bewegungsrichtung zwischen Messwagen und Folie in die neue Richtung entsprechend dem Doppelpfeil 30 schwenken. Ein Gleiten der Rollen quer zu ihrer Rollrichtung kann so vermieden werden.

An den gekröpften Haltern 23 ist unterhalb der Kröpfung, senkrecht über den Drehachsen der Präzisionsrollen über jeweils ein Drehgelenk eine Aufhängung 22 für den Abstandssensor 26 montiert. Durch diese Aufhängung des Sensors ist gewährleistet, dass sich dieser immer mittig zwischen den Auflagepunkten der Rollen befindet und - unabhängig von der Verschwenkung der Rollen - immer den gleichen Abstand zu der Folie 12 und der Metallwalze 1 aufweist.

Um bei einem Traversiervorgang sicherstellen zu können, dass beide Rollen immer Kontakt zur Folie halten, auch wenn ein leichter Versatz zwischen Metallwalze und der Aufhängung des Messwagens zum Tragen kommt, ist der Messwagen über die Achse 25 kippbar an einer Haltestange 28 befestigt. Diese Haltestange wiederum ist in einem Lager 29 in vertikaler Richtung verschiebbar gelagert.

Das Signal des Sensors wird über eine Leitung 27 einem Prozessor zugeführt. Bei diesem Ausführungsbeispiel muss dass Signal nicht in Abhängigkeit von dem Drehwinkel, den die rollen zur Transportrichtung der Folie einnehmen, kompensiert werden, da sich der Abstand des Sensors von der Folie bei unterschiedlichen Drehwinkeln nicht verändert.

Im ersten Ausführungsbeispiel kann der gesamte Messwagen und im zweiten Ausführungsbeispiel können die gekröpften Halter in eine Drehrichtung, beispielsweise über eine Feder, minimal vorgespannt werden. Dadurch richten sich bei einem Traversiervorgang die Präzisionsrollen nicht vollkommen in die relative Bewegungsrichtung zwischen Folie und Messwagen ein. Es erfolg somit ein minimales seitliches Gleiten der Rollen auf der Folie. Als Folge können die Präzisionsrollen nicht verschmutzen und werden frei von jeder Ablagerung gehalten. Selbstverständlich darf die angelegte Drehkraft nur so groß sein, dass keine Schleifspuren auf der Folie sichtbar werden. Dies ist natürlich von dem jeweils zu vermessenden Material abhängig.

Die Fig. 5 und Fig. 6 zeigen sowohl das erste Ausführungsbeisbiel (Fig. 6) als auch das zweite Ausführungsbeispiel (Fig. 5) in einer Ausführungsform mit zwei Abstandssensoren. Bei dem zweiten Ausführungsbeispiel wird hierzu an der Aufhängung 22 (s. Fig. 3 bzw. 4) eine zusätzliche Halterung 31 (s. Fig. 5) angebracht, an deren Enden jeweils ein Sensor 36 und 46 vorgesehen ist.

Die Signale der beiden Sensoren werden über die Leitungen 27 und 37 wiederum einem Prozessor zugeführt. Stellt der Prozessor unterschiedliche Änderungen der Signale der beiden Sensoren fest, so lässt sich daraus auf ein seitliches verkippen des Messwagens schließen. Über eine hinterlegte Look Up Table (LUT) kann das Messergebnis dann beispielsweise korrigiert werden. Es ist für die Kompensation des Messfehlers aber auch eine Behandlung des jeweiligen Messergebnisses mit Hilfe einer trigonometrischen Funktion möglich.

In der Ausführungsform nach Fig. 6 sind die beiden Sensoren 56 und 66 jeweils am seitlichen Rand des Sensorhalters 2 befestigt.

Um auch bei einem seitlichen Verkippen des Messwagen definierte Bedingungen zu schaffen, sind bei beiden Ausführungsbeispielen die Präzisionsrollen ballig ausgebildet.

## Patentansprüche

1. Vorrichtung zum Messen der Dicke von Materialbahnen, wobei die Materialbahnen über eine Metallwalze oder -platte gezogen werden und ein Abstandssensor über ein Roll-, Gleit-, oder Luftlager in definiertem Abstand über der Oberfläche der Materialbahn gehalten wird, **dadurch gekennzeichnet, dass** zwei Roll-, Gleit-, oder Luftlager so in einer Halteeinrichtung für den Abstandssensor angeordnet sind, dass die Lager in Transportrichtung der Materialbahn gesehen einen Abstand aufweisen, wobei der Abstandssensor zwischen den Roll-, Gleit-, oder Luftlagern vorgesehen ist.

2. Vorrichtung zum Messen der Dicke von Materialbahnen nach Anspruch 1, **dadurch gekennzeichnet, dass** der Abstandssensor auf einer Linie zwischen den Roll-, Gleit-, oder Luftlagern angeordnet ist.

3. Vorrichtung zum Messen der Dicke von Materialbahnen nach Anspruch 1, **dadurch gekennzeichnet, dass** die Halteeinrichtung für den Abstandssensor mit einer Traversiereinrichtung quer zur Transportrichtung der Materialbahn bewegbar ist.

4. Vorrichtung zum Messen der Dicke von Materialbahnen nach Anspruch 2, **dadurch gekennzeichnet, dass** die Halteeinrichtung einen ersten Halter für den Abstandssensor und eines der Roll-, Gleit-, oder Luftlager und einen zweiten Halter für das zweite Roll-, Gleit-, oder Luftlager aufweist, wobei der erste Halter schwenkbar über eine parallel zur Oberfläche der Materialbahn verlaufende Achse mit dem zweiten Halter verbunden ist.

5. Vorrichtung zum Messen der Dicke von Materialbahnen nach Anspruch 4, **dadurch gekennzeichnet, dass** die Halteeinrichtung drehbar um eine Achse senkrecht zur Oberfläche der Materialbahn an der Traversiereinrichtung aufgehängt ist.

6. Vorrichtung zum Messen der Dicke von Materialbahnen nach Anspruch 5, **dadurch gekennzeichnet, dass** an der Aufhängung der Halteeinrichtung ein Winkelgeber vorgesehen ist, mit dem der Drehwinkel der Halteeinrichtung gegenüber der Traversiereinrichtung messbar ist.

7. Vorrichtung zum Messen der Dicke von Materialbahnen nach Anspruch 1, **dadurch gekennzeichnet, dass** die Lager als ballig geschliffene Präzisionsrollen ausgeführt sind.

8. Vorrichtung zum Messen der Dicke von Materialbahnen nach Anspruch 7, **dadurch gekennzeichnet, dass** die Achse, über die der erste Halter mit dem zweiten Halter schwenkbar verbunden ist, durch die Drehachse der Präzisionsrolle in dem zweiten Halter verläuft.

9. Vorrichtung zum Messen der Dicke von Materialbahnen nach Anspruch 1, **dadurch gekennzeichnet, dass** die Präzisionsrollen in der Halteeinrichtung jeweils drehbar über eine nachlaufende Achse aufgehängt sind.

10. Vorrichtung zum Messen der Dicke von Materialbahnen nach Anspruch 9, **dadurch gekennzeichnet, dass** ein Halter für den Abstandssensor so befestigt ist, dass der Halter an seinen beiden Enden jeweils über eine Achse drehbar ist, die senkrecht auf den Drehachsen der Präzisionsrollen steht, wobei der Abstandssensor mittig zwischen diesen Achsen an dem Halter befestigt ist.

11. Vorrichtung zum Messen der Dicke von Materialbahnen nach Anspruch 7 oder 10, **dadurch gekennzeichnet, dass** an dem Halter zwei Abstandssensoren nebeneinander, symmetrisch zu einer Verbindungslinie zwischen den beiden Drehachsen des Halters, befestigt sind.

12. Vorrichtung zum Messen der Dicke von Materialbahnen nach Anspruch 11, **dadurch gekennzeichnet, dass** die Halteeinrichtung schwenkbar um eine Achse parallel zur Oberfläche der Materialbahn und senkrecht zur Transportrichtung der Materialbahn aufgehängt ist.
